(19) Europäisches Patentamt / European Patent Office / Office européen des brevets

(11) EP 2 727 882 A1

(12) **EUROPEAN PATENT APPLICATION**
published in accordance with Art. 153(4) EPC

(43) Date of publication:
**07.05.2014 Bulletin 2014/19**

(21) Application number: **12792175.7**

(22) Date of filing: **29.05.2012**

(51) Int Cl.:
***C01B 31/20*** *(2006.01)* ***B01J 23/42*** *(2006.01)*
***B01J 37/34*** *(2006.01)* ***C25B 1/00*** *(2006.01)*
***C25B 11/03*** *(2006.01)*

(86) International application number:
**PCT/JP2012/003505**

(87) International publication number:
**WO 2012/164912 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2011 JP 2011122067**
**03.10.2011 JP 2011219484**

(71) Applicants:
- **Panasonic Corporation**
**Osaka 571-8501 (JP)**
- **Japan Science and Technology Agency**
**Kawaguchi-shi**
**Saitama 332-0012 (JP)**

(72) Inventors:
- **KAMAI, Ryo**
**Osaka 540-6207 (JP)**
- **SUZUKA, Michio**
**Osaka 540-6207 (JP)**
- **NAKANISHI, Shuji**
**Osaka 540-6207 (JP)**
- **HASHIMOTO, Kazuhito**
**Tokyo 113-8654 (JP)**
- **HELLER, Adam**
**Austin, Texas 78701 (US)**
- **ZHAO, Yong**
**Tokyo 113-8654 (JP)**

(74) Representative: **Müller-Boré & Partner**
**Patentanwälte PartG mbB**
**Friedenheimer Brücke 21**
**80639 München (DE)**

# (54) CARBON DIOXIDE ENRICHMENT DEVICE

(57) An object of the present invention is to provide a carbon dioxide enrichment device that has high enrichment performance, and also enables a significant reduction in energy required during driving. Provided is a carbon dioxide enrichment device, comprising:
a first gas diffusion electrode 1;
a second gas diffusion electrode 2 separated from the first gas diffusion electrode 1; and
an electrolytic solution 3 existing between the first gas diffusion electrode 1 and the second gas diffusion electrode 2 to be in contact with the first gas diffusion electrode 1 and the second gas diffusion electrode 2,
wherein the electrolytic solution 3 contains a solvent and a solute dissolved in the solvent, and the solute is dissolved in the solvent to form a dissolved inorganic carbon containing at least one of carbonic acid, hydrogen carbonate ions, and carbonic acid ions; oxygen is consumed by an oxygen reduction reaction on the first gas diffusion electrode 1, whereby a dissolved inorganic carbon is formed by a dissolution and ionization reaction of carbon dioxide in the solvent; the dissolved inorganic carbon derived from the solute or the dissolved inorganic carbon formed on the first gas diffusion electrode 1 is transported to the second gas diffusion electrode 2; and oxygen is formed from the solvent in the vicinity of the second gas diffusion electrode 2 by an oxidation reaction of the solvent on the second gas diffusion electrode 2, and carbon dioxide is formed from the dissolved inorganic carbon.

EP 2 727 882 A1

Fig. 1

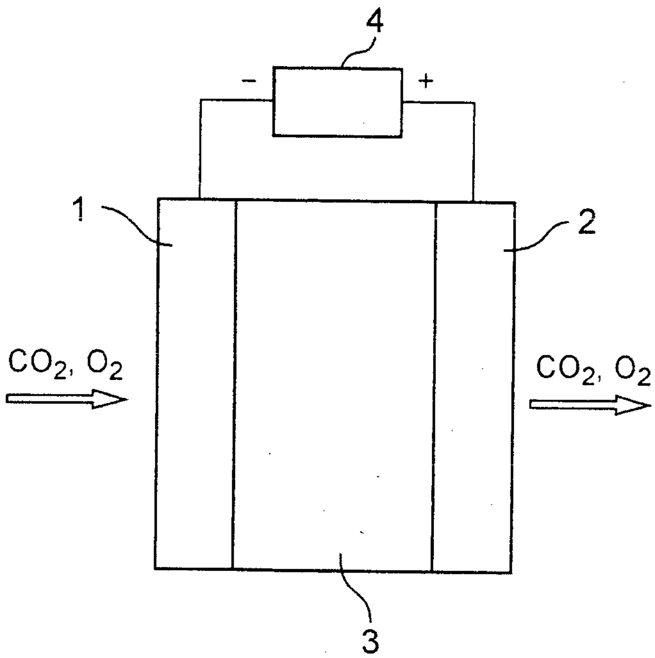

## Description

### Technical Field

The present invention relates to a device capable of enriching carbon dioxide by causing dissolution and release of carbon dioxide in an electrolytic solution utilizing an oxygen-generating/oxygen-reducing electrochemical reaction.

### Background Art

Carbon dioxide is a substance widely distributed on earth, accounting for 0.04% of the atmosphere, which is a compound widely used for industrial applications. Specific examples of industrial use of carbon dioxide include foaming gas for carbonated drinks, bath salts, and fire extinguishing agents; dry ice for cooling; and air for emergency replenishment of automobiles. Carbon dioxide in a supercritical state is also used as an extracting solvent for caffeine, and is further used in a laser that is used in the industrial field, and a carbonic acid gas laser that is used as a medical laser knife. It is also used as a substitute for a chlorofluorocarbon refrigerant in a $CO_2$ refrigerant compressor.

In the agricultural field, carbon dioxide is used as a carbon dioxide fertilizer for facilitating the growth of plants such as strawberry in forcing culture, and water plant in a water tank for admiration, and is also used in controlled atmosphere (CA) storage for fresh agricultural products.

As mentioned above, carbon dioxide has been popularly used, and there has hitherto been a technique of a carbon dioxide facilitated transport membrane utilizing a difference in a permeability rate of a porous polymer membrane as mentioned in Non-Patent Document 1, or a technique using a solid molten salt as mentioned in Patent Document 1, as a technique of enriching carbon dioxide. In the carbon dioxide facilitated transport membrane, there exists a need to pressurize a gas to high pressure of about 200 kPa or higher against the carbon dioxide facilitated transport membrane so as to enrich carbon dioxide, and to reduce the pressure of the side where the enriched gas permeates. Even in the case of the technique using a solid molten salt, there existed a need to maintain the device at high temperature of about 600°C so as to drive the device since the molten salt is used. As mentioned above, there has never existed a device capable of enriching carbon dioxide with low energy consumption without requiring a large-scale apparatus.

### Prior Art Documents

#### Patent Documents

Patent Document 1: JP 11-28331 A

#### Non-Patent Documents

Non-Patent Documents: R. Yegani et. al., J. Membr. Sci., 291, 157 (2007)

### Disclosure of the Invention

#### Problems to be Solved by the invention

The solutions reported in the above prior art documents require a great deal of energy, that is, there exists a need to apply heat during desorption (release) of carbon dioxide or to maintain high temperature during driving, and had a problem that it is impossible to achieve both enrichment performance of carbon dioxide and low energy consumption.

In light of the above circumstance, the present invention has been made and an object thereof is to provide a carbon dioxide enrichment device that has high enrichment performance, and also enables a significant reduction in energy required during driving.

#### Means for Solving the Problems

The carbon dioxide enrichment device according to the present invention is characterized by comprising: a first gas diffusion electrode functioning as a cathode; a second gas diffusion electrode separated from the first gas diffusion electrode, functioning as an anode; and an electrolytic solution existing between the first gas diffusion electrode and the second gas diffusion electrode to be in contact with the first gas diffusion electrode and the second gas diffusion electrode, being characterized in that the electrolytic solution contains a solvent and a solute dissolved in the solvent, and the solute is dissolved in the solvent to form a dissolved inorganic carbon containing at least one of carbonic acid, hydrogen carbonate ions, and carbonic acid ions; when a voltage is applied between the first gas diffusion electrode and the

second gas diffusion electrode, and carbon dioxide and oxygen are introduced into the first gas diffusion electrode, oxygen is consumed by an oxygen reduction reaction on the first gas diffusion electrode, as shown in the below-mentioned [Chemical Formula 2] in this first gas diffusion electrode, and also hydrogen carbonate ions are formed by a reaction of carbon dioxide with hydroxide ions $OH^-$. Dissolved inorganic carbon (carbonic acid, hydrogen carbonate ions, carbonic acid ions) derived from the solute or the dissolved inorganic carbon formed on the first gas diffusion electrode is transported to the second gas diffusion electrode in the electrolytic solution, whereby, oxygen is formed from the solvent in the vicinity of the second gas diffusion electrode by an oxidation reaction of the solvent on the second gas diffusion electrode, as shown in the below-mentioned [Chemical Formula 3], and also carbon dioxide is formed from the dissolved inorganic carbon. Namely, when a voltage is applied between the first gas diffusion electrode and the second gas diffusion electrode, and carbon dioxide and oxygen are introduced into the first gas diffusion electrode, carbon dioxide and oxygen are emitted from the second gas diffusion electrode.
[Chemical Formula 2]

$$O_2 + 2H_2O + 4e^- \rightarrow 4OH^-$$

$$CO_2 + OH^- \rightarrow HCO_3^-$$

[Chemical Formula 3]

$$H_2O \rightarrow 1/2O_2 + 2H^+ + 2e^-$$

$$HCO_3^- + H^+ \rightarrow H_2O + CO_2$$

As used herein, "dissolved inorganic carbon" means at least one selected from the group consisting of carbonic acid, hydrogen carbonate ions, and carbonic acid ions, formed by dissolving carbon dioxide in a solvent.

As used herein, "enrichment" means that the concentration of a specific gas is made higher than that in an initial state, and "carbon dioxide enrichment device" means a device capable of making the concentration of carbon dioxide higher than that in an initial state with high selectivity.

In the carbon dioxide enrichment device according to the present invention, a total inorganic carbon concentration in the electrolytic solution existing between a first gas diffusion electrode and a second gas diffusion electrode, calculated by the following [Equation 1], is preferably 100 μmol/L or more.

[Equation 1]

$$(\text{Total inorganic carbon concentration}) = [H_2CO_3] + [HCO_3^-] + [CO_3^{2-}]$$

In the carbon dioxide enrichment device according to the present invention, pH of the electrolytic solution is preferably in the range of from 5 to 14.

In the carbon dioxide enrichment device according to the present invention, a molar ratio of carbon dioxide and oxygen to be emitted from the second gas diffusion electrode is in the range of 1:0.1 to 1:10.

In the carbon dioxide enrichment device according to the present invention, the first gas diffusion electrode and the second gas diffusion electrode preferably comprise a porous conductor and an electrode catalyst.

In the carbon dioxide enrichment device according to the present invention, the electrode catalyst contains a metal complex or a catalytic component of the metal complex, the metal complex containing any one of a polymer of one or more monomers selected from the group consisting of diaminopyridine, triaminopyridine, tetraaminopyridine, a diaminopyridine derivative, a triaminopyridine derivative, and a tetraaminopyridine derivative; or a modified product of the polymer; or a catalytic metal; and the electrode catalyst also satisfying at least one of the following (i) and (ii):

(i) the content of metal coordinated to a nitrogen atom, analyzed by X-ray photoelectron spectroscopy, is 0.4 mol% or more, and
(ii) the existence of metal coordinated to a nitrogen atom is recognized by X-ray photoelectron spectroscopy, and also the content of the nitrogen atom is 6.0 mol% or more.

In the carbon dioxide enrichment device according to the present invention, the electrode catalyst contains a polymer of one or more monomers selected from the group consisting of diaminopyridine, triaminopyridine, and tetraaminopyridine; or a fired metal complex obtained by firing a polymer metal complex composed of a catalytic metal; or a catalyst component of the fired metal complex.

In the carbon dioxide enrichment device according to the present invention, a specific surface area of the porous conductor is preferably 1 $m^2/g$ or more, in the BET adsorption measurement.

In the carbon dioxide enrichment device according to the present invention, the electrolytic solution is a polymer gel electrolyte.

In the carbon dioxide enrichment device according to the present invention, the electrolytic solution contains a carbonic anhydrase catalyst facilitating a reaction of the following [Chemical Formula 1]:

[Chemical Formula 1] $CO_2 + H_2O \rightarrow HCO_3^- + H^+$.

Effects of the Invention

According to the carbon dioxide enrichment device of the present invention, in the constituion including a first gas diffusion electrode, a second gas diffusion electrode, and an electrolytic solution that exists between the first gas diffusion electrode and the second gas diffusion electrode, when a voltage is applied between the first gas diffusion electrode and the second gas diffusion electrode, and carbon dioxide and oxygen are introduced into the first gas diffusion electrode, a reaction occurs in this first gas diffusion electrode, as shown in the above-mentioned [Chemical Formula 2], and $HCO_3^-$ formed by the [Chemical Formula 2] or $CO_3^{2-}$ and $H_2CO_3$ formed by an equilibrium reaction of $HCO_3^-$ permeates through the electrolytic solution. Whereby, a reaction occurs in the second gas diffusion electrode, as shown in the above-mentioned [Chemical Formula 3], and thus discharging carbon dioxide and oxygen from the second gas diffusion electrode, leading to the achievement of carbon dioxide enrichment. Therefore, the carbon dioxide enrichment device exert an excellent effect capable of significantly reducing energy required during driving since it has high carbon dioxide enrichment performance and there is no need to heat during releasing carbon dioxide.

Accordingly, according to the present invention, it is possible to provide a carbon dioxide enrichment device that has high enrichment performance, and also enables a significant reduction in energy required during driving.

Brief Description of the Drawings

Fig. 1 is a schematic sectional view illustrating an embodiment of a carbon dioxide enrichment device according to the present invention.

Fig. 2 is a characteristic diagram of the amount of $CO_2$ emissions per unit area versus the time when using an electrolytic solution having a pH of 9.0, in the carbon dioxide enrichment device.

Fig. 3 is a characteristic diagram of the amount of $CO_2$ emissions per unit area versus the time when using electrolytic solutions of various pHs, in the carbon dioxide enrichment device.

Fig. 4 is a characteristic diagram of the amount of $CO_2$ emissions per unit area versus the time when using a CoDAPP catalyst or a platinum-supported carbon black, in the carbon dioxide enrichment device.

Mode for Carrying Out the Invention

An example of a carbon dioxide enrichment device is illustrated in Fig. 1. The carbon dioxide enrichment device includes a first gas diffusion electrode (gas diffusion electrode 1) as a cathode, a second gas diffusion electrode (gas diffusion electrode 2) as an anode, and an electrolytic solution 3. The electrolytic solution 3 exists between the gas diffusion electrode 1 and the gas diffusion electrode 2. Namely, the gas diffusion electrode 1 and the gas diffusion electrode 2 are in contact with the electrolytic solution 3, and a gas and an electrolytic solution exist so that a three-phase interface of an electrode (solid phase), an electrolytic solution (liquid phase or solid phase), and a gas (vapor phase) containing carbon dioxide and oxygen is formed on a surface of the gas diffusion electrode 1 and the gas diffusion electrode 2, and thus enabling an electrode reaction due to the gas and the electrolytic solution.

The gas diffusion electrode 1 and the gas diffusion electrode 2 have a structure including a catalyst layer made of a porous conductor, one surface of which is subjected to water repellent finishing, and the other surface of which includes an oxygen reduction catalyst support thereon.

The porous conductor preferably has a large specific surface area so as to increase a reaction area. The specific surface area of the porous conductor is preferably 1 $m^2/g$ or more, more preferably 100 $m^2/g$ or more, and still more preferably 500 $m^2/g$ or more, in the BET adsorption measurement. In case the specific surface area of the porous conductor is less than 1 $m^2/g$ in the BET adsorption measurement, the reaction amount decreases because of a small

area of the three-phase interface, thus failed to attain sufficient carbon dioxide enrichment performance. In order to reduce voltage loss due to surface resistance of the porous conductor, the lower the surface resistance of the porous conductor, the better it is. The surface resistance is preferably 1 kΩ/□ or less, and more preferably 200 Ω/□ or less. Preferred examples of the porous conductor include a carbon sheet, a carbon cloth, a carbon paper, and the like.

It is necessary for the gas diffusion electrode 1 and the gas diffusion electrode 2 to subject to water repellent finishing for the purpose of preventing flooding that inhibits diffusion of a gas if the moisture content in the vicinity of a catalyst layer becomes excessive. Water repellent finishing can be performed by coating a surface of a porous conductor with polytetrafluoroethylene (PTFE). This water repellent finishing enables the gas diffusion electrode 1 and gas diffusion electrode 2 to have a property capable of permeating a gas, but incapable of permeating water, and also the gas diffusion electrodes have a feature that the gas can diffuse to the catalyst layer.

On a surface of the opposite side paired with the side subjected to water repellent finishing of the gas diffusion electrode 1 and the gas diffusion electrode 2, a catalyst layer made of a conductor, on which an oxygen reduction catalyst is supported, is formed so as to reduce overvoltage of an oxygen reduction reaction. Since the active site increases as the surface area of the catalyst becomes larger, the smaller the particle size, the better it is, so as to increase specific surface area. In order to increase the reaction amount, the larger the catalyst support amount, the better it is. The catalyst support amount is preferably 0.05 $mg/cm^2$ or more. The catalyst carrier is preferably a conductor having a small particle size, and the particle size of the catalyst carrier is preferably larger than that of the catalyst and is also as small as possible. Examples of the catalyst carrier to be used very often include carbon black having a particle size of about 3 to 500 nm. Preferred examples of the catalyst carrier to be supported on the gas diffusion electrode 1 and the gas diffusion electrode 2 include alloys or complexes containing at least one metal selected from transition metals capable of acting as an adsorption site of oxygen, such as Sc, Ti, V, Cr, Mn, Fe, Co, Ni, Cu, Zr, Nb, Mo, Ru, Rh, Pd, Ag, Ir, Pt, and Au; or compounds containing these metals as a dopant; carbon nanotube; and graphite. Of these catalyst carriers, Pt, Pt/Ru, and carbon nanotube each having a particle size of several nanometers are particularly preferred. Pt catalyst is a catalyst that is often used as an oxygen reduction catalyst, but is likely to be poisoned by carbon monoxide (CO). In the carbon dioxide enrichment device, since CO may be accidentally formed, it is preferred to use Pt/Ru as an alloy catalyst of ruthenium (Ru) and platinum that have durability against CO poisoning.

The electrode catalyst may be those containing, as a catalyst component, 1) a metal complex having specific physical properties, or 2) a metal complex obtained by firing a specific polymer metal complex.

Specifically, the electrode catalyst is preferably a polymer of one or more monomers selected from diaminopyridine, triaminopyridine, tetraaminopyridine, a diaminopyridine derivative, a triaminopyridine derivative, and a tetraaminopyridine derivative, and/or a modified product thereof, and a metal complex composed of a catalytic metal. The diaminopyridine, triaminopyridine, and tetraaminopyridine are compounds in which hydrogen atoms (H) of pyridine ($C_5H_5N$) are respectively substituted with two, three or fours amino groups ($-NH_2$). The 2-4 aminopyridine polymer may be composed of a monomer alone or a combination of two or more monomers. The 2-4 aminopyridine polymer is a generic name of a compound obtained by polymerizing diaminopyridine ($C_5H_7N_3$), triaminopyridine ($C_5H_8N_4$), tetraaminopyridine ($C_5H_9N_5$), a diaminopyridine derivative, a triaminopyridine derivative, or a tetraaminopyridine derivative as a monomer.

Examples of known position isomer of diaminopyridine include 2,3-diaminopyridine, 2,4-diaminopyridine, 2,5-diaminopyridine, 2,6-diaminopyridine, and 3,4-diaminopyridine; examples of known position isomer of triaminopyridine include 2,3,4-triaminopyridine, 2,3,5-triaminopyridine, 2,3,6-triaminopyridine, 2,4,5-triaminopyridine, and 3,4,5-triaminopyridine; and examples of known position isomer of tetraaminopyridine include 2,3,4,5-tetraaminopyridine, 2,4,5,6-tetraaminopyridine, and 2,3,5,6-tetraaminopyridine. Each monomer composing the 2-4 aminopyridine polymer may be any position isomer. The 2-4 aminopyridine polymer may be composed only of the same position isomer, or different two or more position isomers.

In case the 2-4 aminopyridine polymer is composed of two or more monomers and/or two or more position isomers, the position of each monomer and/or position isomer in the 2-4 aminopyridine polymer is not particularly limited as long as it is polymerizable. For example, it may be polymerized so that a combination of specific monomers is regularly repeated, or may be polymerized at random.

Regarding the polymer metal complex, a ligand included in the 2-4 aminopyridine polymer coordinates a catalytic metal. Examples of the atom (ligating atom) that can serve as a ligand in the polymer include a nitrogen atom of the pyridine ring and/or a nitrogen atom of an amino group. Diaminopyridine, triaminopyridine and tetraaminopyridine include three, four and five nitrogen atoms capable of serving as a ligand in a molecule. Therefore, the 2-4 aminopyridine polymer composed of these monomers contains a lot of nitrogen atoms. Accordingly, it can coordinate a lot of catalytic metals as compared with an electrode catalyst containing, as a base, a metal complex composed of a polymer that coordinates a conventional catalytic metal, and thus making it possible to have high oxygen reduction reaction (ORR) catalytic activity.

A preferred example of the 2-4 aminopyridine polymer includes a diaminopyridine polymer in which only diaminopyridine is polymerized. The position isomer composing the diaminopyridine polymer is not particularly limited and is preferably 2,6-diaminopyridine and/or 2,3-diaminopyridine. The reason is that these position isomers can coordinate the

catalytic metal in the polymer in a more stable manner since nitrogen atoms (N) are most proximally disposed each other. The diaminopyridine polymer is more preferably a 2,6-diaminopyridine polymer in which only a 2,6-diaminopyridine monomer is polymerized.

The chemical polymerization reaction, that causes bonding of the respective monomers composing the 2-4 aminopyridine polymer, is not particularly limited, and is preferably anionic polymerization. In case the polymer is a 2,6-diaminopyridine polymer, it is presumed that the polymer includes, for example, chemical structure(s) represented by the below-mentioned [Chemical Formula 4] and/or [Chemical Formula 5] through anionic polymerization of 2,6-diaminopyridine.

[Chemical Formula 4]

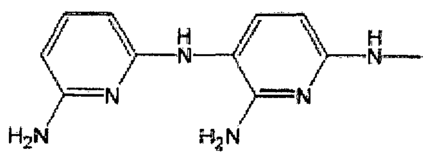

(I)

[Chemical Formula 5]

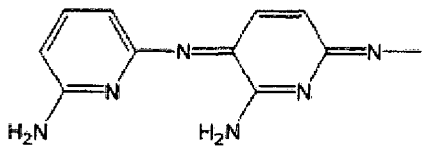

(II)

In the 2-4 aminopyridine polymer metal complex as a catalyst component, the catalytic metal is a substance that plays a role in direct catalytic activity. The catalytic metal is not particularly limited and is preferably a transition metal. Specific examples thereof include atoms of titanium (Ti), vanadium (V), chromium (Cr), manganese (Mn), iron (Fe), cobalt (Co), nickel (Ni), copper (Cu), zirconium (Zr), niobium (Nb), molybdenum (Mo), ruthenium (Ru), rhodium (Rh), palladium (Pd), silver (Ag), hafnium (Hf), tantalum (Ta), tungsten (W), rhenium (Re), osnium (Os), iridium (Ir), platinum (Pt), and gold (Au), or ions thereof. Persons skilled in the art may appropriately select a proper catalytic metal from these catalytic metals according to the intended purposes, taking cost, supply amount, catalytic activity efficiency, and the like into consideration. In the electrode catalyst of the present invention, the catalytic metal is preferably Cr, Mn, Fe, Co, Ni, and Cu. Of these electrode catalytic metals, Fe and Co are preferred. The metal complex may be obtained by coordinating a catalytic metal alone, or coordinating different two or more catalytic metals.

It is presumed to include, as the structure of the 2-4 aminopyridine polymer metal complex, a structure represented by the below-mentioned [Chemical Formula 6] in the case of a metal complex in which a 2,6-diaminopyridine polymer coordinates cobalt as a catalytic metal (Co-2,6-diaminopyridine polymer, which is abbreviated to "CoDAPP").

[Chemical Formula 6]

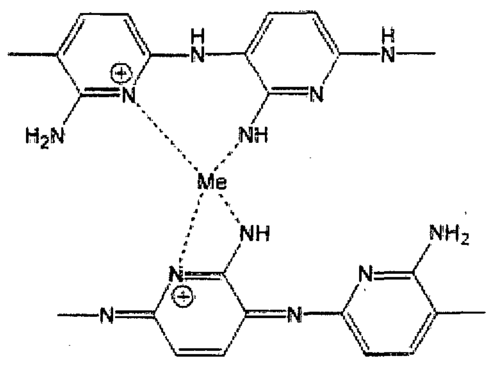

(III)

The 2-4 aminopyridine polymer metal complex is preferably obtained by a firing treatment of a polymer metal complex. The reason is that a catalytic metal in the polymer metal complex is stably coordinates to a nitrogen atom by

the firing treatment, and thus stable catalytic activity as well as high durability and corrosion resistance can be obtained by chemical hardening.

A mixing ratio of the 2-4 aminopyridine polymer to the catalytic metal salt in the 2-4 aminopyridine polymer metal complex may be selected so that a molar ratio of a raw monomer to a catalytic metal atom becomes 3:1 to 5:1, and preferably 3.5:1 to 4.5:1.

The firing temperature for firing treatment is from 650 to 800°C, preferably from 680 to 780°C, more preferably from 690 to 760°C, and still more preferably from 700 to 750°C. The firing treatment can be performed by a known method for a heat treatment of an electrode catalyst. For example, a powder of a dry polymer metal complex may be fired under a reducing gas atmosphere at the firing temperature for 30 minutes to 5 hours, and preferably 1 to 2 hours. It is possible to use, as a reducing gas, for example, ammonia.

As used herein, "specific physical properties" mean physical properties exhibited by the 2-4 aminopyridine polymer metal complex, for example, at least one of the below-mentioned properties (i) and (ii) obtained as a result in which coordaination of a catalytic metal to a nitrogen atom becomes stable in a polymer metal complex by firing the polymer metal complex:

(i) the content of metal coordinated to a nitrogen atom analyzed by X-ray photoelectron spectroscopy is 0.4 mol% or more, and

(ii) the existence of metal coordinated to a nitrogen atom is recognized by X-ray photoelectron spectroscopy, and also the content of the nitrogen atom is 6.0 mol% or more.

The content of metal coordinated to a nitrogen atom and the content of the nitrogen atom are measured by X-ray photoelectron spectroscopy. The content is the proportion thereof based on the metal complex (based on 100 mol% of the metal complex).

The 2-4 aminopyridine polymer may be partially modified by firing thereby to lose the form of a polymer. Such modification is permitted as long as a fired metal complex can be used as an electrode catalyst, and thus the 2-4 aminopyridine polymer metal complex can contain a substance in which the 2-4 aminopyridine polymer was modified by firing.

There is no particular limitation on the shape of the fired metal complex. However, the larger the specific surface area per unit area of the electrode catalyst to be supported on a surface of an electrode, the better it is. The reason is that it is possible to more enhance catalytic activity (mass activity) per unit area of the electrode. Therefore, the shape is preferably a particle, and particularly preferably a powder. The specific surface area of the fired metal complex is preferably 100 $m^2/g$ or more, more preferably 400 $m^2/g$ or more, and still more preferably 500 $m^2/g$ or more. Such specific surface area can be measured by a nitrogen BET adsorption method.

The electrode catalyst containing a metal complex can contain a catalyst component other than the above-mentioned fired metal complexes. For example, known catalysts such as a CoTMPP catalyst may be contained.

Both the gas diffusion electrode 1 and the gas diffusion electrode 2 are disposed so that the side, on which a catalyst is supported, is in contact with the electrolytic solution 3, and that the side subjected to water repellent finishing is in contact with an external gas.

The gas diffusion electrode 1 and the gas diffusion electrode 2 are connected to a DC power 4 through an external circuit. It is necessary that DC voltage to be applied between the gas diffusion electrode 1 and the gas diffusion electrode 2 is a voltage that causes a reduction reaction of oxygen in the gas diffusion electrode 1 (cathode), and also causes an oxidation reaction of water in the gas diffusion electrode 2 (anode). When using water as the solvent of the electrolytic solution 3, the voltage is preferably a voltage that does not cause electrolysis of water so as to permanently operate the device, and is preferably a voltage not exceeding 1.2 V that is a voltage to be determined from free energy of a decomposition reaction of water, where no electrolysis does not theoretically occur. In case there is a loss such as IR drop of an electrode or an electrolyte, 1.2 V or higher voltage may be applied. In this case, the voltage is preferably 10 V or lower. The voltage is more preferably 5 V or lower, and still more preferably 2 V or lower.

The device is driven by supplying a gas containing carbon dioxide and oxygen to the gas diffusion electrode 1 from the external atmosphere such as atmosphere. Therefore, the gas diffusion electrode 1 is preferably provided so that a contact area with the external atmosphere increases.

It is preferred that the gas diffusion electrode 1 and the gas diffusion electrode 2 are disposed oppositely each other. A distance between the gas diffusion electrode 1 and gas diffusion electrode 2, that face each other, is a distance wide enough to prevent mutual contact between electrodes so as to reduce voltage drop (IR drop) due to solution resistance as small as possible, and both electrodes are preferably disposed in proximity as close as possible. In case the electrolytic solution 3 has sufficiently high ion concentration and also has small solution resistance, it is possible to reduce voltage loss due to IR drop. If there is a fear that both electrodes may be in contact with each other by close proximity of both electrodes in terms of a structure of the device, a separator may be inserted between the gas diffusion electrode 1 and the gas diffusion electrode 2. This separator preferably has properties that make it to possible to contain

an electrolytic solution 3, and also has insulating properties. In order to prevent diffusion properties of ions existing in the electrolytic solution 3 from causing deterioration, the higher the void ratio of the separator, the better it is. Specific examples of thereof include a polyolefin porous membrane made of materials typified by polyethylene and polypropylene; a porous membrane and a nonwoven fabric made of polyester, aliphatic polyamide, aromatic polyamide, and the like.

It is necessary for a solution used in the electrolytic solution 3 to form carbonic acid when dissolved in the solvent, or to form hydrogen carbonate ions and carbonic acid ions when ionized. Specifically, a hydrogen carbonate and a carbonate of an alkali metal, and a hydrogen carbonate and a carbonate of an alkali earth metal are used as such solute and, more specifically, $NaHCO_3$, $KHCO_3$, $LiHCO_3$, $Na_2CO_3$, $K_2CO_3$, and $Li_2CO_3$ are used. It is necessary for the solvent used in the electrolytic solution 3 to have properties that enable formation of hydroxide ions by an oxygen reduction reaction on the cathode to thereby make basic in the vicinity of a cathode electrode; generation of oxygen by an oxidation reaction of a solvent on the anode; and generation of hydrogen ions to thereby make acidic in the vicinity of an anode electrode. Namely, in the vicinity of the anode, water is formed by a reaction of hydroxide ions with hydrogen ions. Therefore, water is preferably used as the solvent so as to enable long-term driving.

Since carbon dioxide to be absorbed by the gas diffusion electrode 1 moves in the electrolytic solution 3 of the device in the form of hydrogen carbonate $HCO_3^-$, carbonic acid ions $CO_3^{2-}$, and carbonic acid $H_2CO_3$, the total inorganic carbon concentration in the electrolytic solution 3 to be calculated by [Equation 1] is preferably 100 $\mu$mol/L or more so as to enrich carbon dioxide immediately after application of a voltage. In case the total inorganic carbon concentration to be calculated by [Equation 1] is less than 100 $\mu$mol/L, the diffusion rate of hydrogen carbonate $HCO_3^-$, carbonic acid ions $CO_3^{2-}$, or carbonic acid $H_2CO_3$ from the gas diffusion electrode 1 to the gas diffusion electrode 2 is a rate-limiting factor, resulting in deterioration of performance of the carbon dioxide enrichment device. If the total inorganic carbon concentration is 100 $\mu$mol/L or more, the diffusion rate of hydrogen carbonate $HCO_3^-$, carbonic acid ions $CO_3^{2-}$, or carbonic acid $H_2CO_3$ from the first gas diffusion electrode to the second gas diffusion electrode is not a rate-limiting factor, and thus enabling suppression of deterioration of performance of the carbon dioxide enrichment device.

The pH of the electrolytic solution 3 is preferably from 5 to 14. More preferably, the pH of the electrolytic solution 3 is from 8.5 to 9.5. An alkali electrolyte is added to adjust the pH of the electrolytic solution 3. Preferred examples of the electrolyte used to adjust the pH include NaOH, KOH, LiOH, and the like. In case the pH of electrolytic solution 3 is lower than 5, the absorption rate of carbon dioxide drastically decreases and thus absorption of carbon dioxide is a rate-limiting factor. As the carbon dioxide enrichment device is driven, the total inorganic carbon concentration in the electrolytic solution 3 decreases, resulting in deterioration of performance of the carbon dioxide enrichment device. In case the pH of the electrolytic solution 3 is 5 or higher, absorption of carbon dioxide is not a rate-limiting factor, and thus enabling suppression of deterioration of performance of the carbon dioxide enrichment device.

In case the solute concentration is low, a supporting electrolyte may be dissolved in the solvent so as to improve ionic conductivity of the electrolytic solution 3. Preferred examples of the electrolyte include ammonium salts such as tetrabutylammonium perchlorate, tetraethylazanium hexafluorophosphate, imidazolium salt, and pyridinium salt; and alkali metal salts such as lithium perchlorate and potassium borofluoride. The electrolyte also includes salts containing an alkali metal or an alkali earth metal such as lithium, sodium, potassium or calcium, or an organic compound having an amino group as a cation, and a halogen ion such as chlorine or bromine, or sulfonium as an anion. In case the electrolytic solution 3 has sufficient ionic conductivity, there is no need to add a supporting electrolyte.

The electrolytic solution 3 may be gelled and fixed to a predetermined position, or may be formed of a gelled electrolytic solution (gelled electrolytic solution), or a polyelectrolyte. Examples of a gelling agent for gelling the electrolytic solution 3 include a gelling agent, a polymerizable polyfunctional monomer, and an oil gelling agent that utilize a technique such as a polymer or polymer crossliking reaction. Commonly used substances are applied as a gelled electrolytic solution and a polyelectrolyte, and preferred examples thereof include a vinylidene fluoride-based polymer such as polyvinylidene fluoride, an acrylic acid-based polymer such as polyacrylic acid, an acrylonitrile-based polymer such as polyacrylonitrile, a polyether-based polymer such as polyethylene oxide, a compound having an amide structure in the structure, and the like. In case the electrolytic solution is gelled or fixed, the total inorganic carbon concentration of a gelled or fixed electrolytic solution in contact with the gas diffusion electrode 1 and a gelled or fixed electrolytic solution in contact with the gas diffusion electrode 2, that is calculated by [Equation 1], the pH of the electrolyte, presence or absence and kinds of the supporting electrolyte and the concentration thereof may be different. As the total inorganic carbon concentration becomes lower, a reverse reaction rate against an ionization reaction of an equilibrium reaction shown in [Chemical Formula 7] decreases. As the pH of the electrolytic solution 3 becomes higher, an acid dissociation constant pKa value of an equilibrium reaction shown in [Chemical Formula 7] increases. Therefore, in order to facilitate absorption of $CO_2$ on the first gas diffusion electrode side and to facilitate generation of a $CO_2$ gas on the gas diffusion electrode 2 side, it is preferred to decrease the total inorganic carbon concentration and to increase the pH value in the gelled or fixed electrolyte in contact with the gas diffusion electrode 1 as compared with gelled or fixed electrolyte in contact with the gas diffusion electrode 2. In this case, a supporting electrolyte is preferably added to the gelled or fixed electrolyte having smaller ionic conductivity.

[Chemical Formula 7] $CO_2 + H_2O \leftrightarrow H^+ + HCO_3^-$

In a state where a voltage is applied between a gas diffusion electrode 1 and a gas diffusion electrode 2 by a DC power 4, if a gas containing carbon dioxide and oxygen is supplied to the gas diffusion electrode 1, when the concentration of carbon dioxide is low, an electrochemical reaction as shown in the following scheme occurs on the gas diffusion electrode 1 side.

$$O_2 + 2H_2O + 4e^- \rightarrow 4OH^-$$

Thereby, oxygen is reduced to form hydroxide ions, and thus the pH in the vicinity of the electrode becomes higher. The pH change due to this reaction causes a dissolution and ionization reaction of carbon dioxide, as shown in the following scheme.

$$CO_2 + OH^- \rightarrow HCO_3^-$$

If the concentration of carbon dioxide is high, first, the dissolution and ionization reaction of carbon dioxide occurs on the gas diffusion electrode 1 side, as shown in the following scheme.

$$CO_2 + H_2O \rightarrow H^+ + HCO_3^-$$

Using hydrogen ions $H^+$ formed by this reaction, an oxygen-reducing electrochemical reaction occurs, as shown in the following scheme.

$$1/2O_2 + 2H^+ + 2e^- \rightarrow H_2O$$

The higher the concentration of carbon dioxide existing on the gas diffusion electrode 1 side, the more the reaction amount increases, and the current value of the carbon dioxide enrichment device increases.

Subsequently, the hydrogen carbonate $HCO_3^-$ thus formed is partially ionized to form carbonic acid ions $CO_3^{2-}$, and also hydrogen carbonate $HCO_3^-$ is partially converted into carbonic acid $H_2CO_3$ by an equilibrium reaction. The thus formed hydrogen carbonate $HCO_3^-$, carbonic acid ions $CO_3^{2-}$, and carbonic acid $H_2CO_3$ diffuse to the gas diffusion electrode 2 side in the electrolytic solution 3 by concentration diffusion. Since hydrogen carbonate $HCO_3^-$, carbonic acid ions $CO_3^{2-}$, and carbonic acid $H_2CO_3$ exist in the electrolytic solution 3, they undergo concentration diffusion, together with ions and carbonic acid in the electrolytic solution 3.

In the vicinity of the gas diffusion electrode 2, hydrogen carbonate $HCO_3^-$ reaches the gas diffusion electrode 2 by phoresis due to concentration diffusion and an electrostatic force. On the gas diffusion electrode 2 side, an oxidation reaction of water as shown in the following scheme occurs to generate oxygen.

$$2H_2O \rightarrow O_2 + 4H^+ + 4e^-$$

This reaction causes an increase in the concentration of hydrogen ions $H^+$ in the vicinity of the gas diffusion electrode 2, leading to a decrease in pH. Since this pH change significantly shifts equilibrium among hydrogen carbonate $HCO_3^-$, carbonic acid ions $CO_3^{2-}$, and carbonic acid $H_2CO_3$ to the carbonic acid side, hydrogen ions $H^+$ react with hydrogen carbonate $HCO_3^-$ in the electrolytic solution 3 in such manner as shown in the following schemes to form carbon dioxide.

$$H^+ + HCO_3^- \rightarrow H_2CO_3$$

$$H_2CO_3 \rightarrow H_2O + CO_2$$

As a result, a mixed gas of oxygen and carbon dioxide is discharged from the gas diffusion electrode 2 side. In case the atmospheric concentration of carbon dioxide (0.04%) is supplied to a gas diffusion electrode 1, a ratio of oxygen:carbon dioxide is enriched to about 1:1 to 2:1.

In case the concentration of carbon dioxide on the gas diffusion electrode 2 side is high, a reverse reaction of equilibrium as shown in the following scheme is likely to occur, leading to an increase in overvoltage for causing a reaction on the gas diffusion electrode 2 side as an anode.

$$H_2O + CO_2 \rightarrow H^+ + HCO_3^-$$

Therefore, in order to increase the reaction amount at the same voltage, the lower the concentration of carbon dioxide

on the gas diffusion electrode 2 side, the better it is. The concentration is preferably 5% or less. More preferably, the device is provided with equipment, that generates an atmospheric current to thereby always lower the concentration of carbon dioxide, on the gas diffusion electrode 2 side.

Describing in detail the above-mentioned dissolution of carbon dioxide as a gas in the electrolytic solution 3, a reaction occurs first by a reaction as shown in the following scheme in which carbon dioxide molecules are surrounded by hydrated water.

$$CO_2\ (g) \rightarrow CO_2\ (aq)$$

Carbon dioxide dissolved in the electrolytic solution 3 is partially converted into carbonic acid by the addition of water molecules, as shown in the following scheme.

$$CO_2\ (aq) + H_2O\ (1) \rightarrow H_2CO_3\ (aq)$$

A rate constant at 25°C of a forward reaction of this equilibrium reaction is very low, for example, 0.039 $s^{-1}$, and a rate constant of a reverse reaction is 23 $s^{-1}$. Carbonic acid $H_2CO_3$ formed by the above reaction is ionized by an acid dissociation reaction to form hydrogen carbonate $HCO_3^-$ and hydrogen ions $H^+$, as shown in the following scheme.

$$H_2CO_3\ (aq) \rightarrow HCO_3^-\ (aq) + H^+\ (aq)$$

Hydrogen carbonate $HCO_3^-$ is further ionized by an acid dissociation reaction to form carbonic acid ions $CO_3^{2-}$. Carbonic acid $H_2CO_3$, hydrogen carbonate $HCO_3^-$, and carbonic acid ions $CO_3^{2-}$ are in an equilibrium state, and an existing ratio of the respective ions in the electrolytic solution 3 is determined by the pH.

In order to enhance carbon dioxide absorption capacity of the carbon dioxide enrichment device, the electrolytic solution 3 preferably contains a catalyst for a reaction capable of ionizing carbon dioxide and water into hydrogen carbonate $HCO_3^-$ and hydrogen ions $H^+$. Alternatively, it is preferred to support a catalyst for a reaction capable of ionizing carbon dioxide and water into hydrogen carbonate $HCO_3^-$ and hydrogen ions $H^+$, on a surface on which an oxygen reduction catalyst is supported, of the gas diffusion electrode 1. Preferred examples of the catalyst for a reaction capable of ionizing carbon dioxide and water into hydrogen carbonate $HCO_3^-$ and hydrogen ions $H^+$ include a carbonic anhydrase, a tetra-coordinated complex containing a zinc ion $Zn^{2+}$ in the center, and the like.

In the method of enriching carbon dioxide using the carbon dioxide enrichment device, since a mixed gas at a normal temperature supplied to a gas diffusion electrode 1 as a cathode is discharged from a gas diffusion electrode 2 as an anode at a normal temperature, and absorption of carbon dioxide into the device is performed in a chemical manner, and also movement in the device occurs by phoresis due to concentration diffusion and an electrostatic force, there is no need to introduce a great deal of energy. Therefore, it is possible to enrich carbon dioxide at low cost while suppressing energy consumption.

The present invention is not limited to the above-mentioned embodiments and it will, of course, be understood that various modifications can be made without departing from the scope of the present invention.

[Example 1]

The present invention will be specifically described by way of Examples.

[Example 1]

(Production of Gas Diffusion Electrode)

A commercially available carbon paper (porosity of 70%, thickness of 0.4 mm) was used as a conductive porous material. In order to improve gas diffusivity, a solution containing 30% by weight of polytetrafluoroethylene (PTFE) dispersed therein was applied on one surface of the carbon paper by a bar coater method, and then the resin was fixed to the carbon paper by firing in a nitrogen atmosphere electric furnace at a temperature of 340°C for 20 minutes, and thus allowing to undergo water repellent finishing.

A catalyst paste to be applied on the carbon paper was prepared in the following manner. In a zirconia pot for ball mill, a commercially available platinum-supported carbon black (supporting 10 wt% Pt/Vulcan XC-72) was dispersed in 50 mL of a mixed solvent (2-propanol/water = 1/1) so that the content of the carbon black becomes 100 mg. While stirring the dispersion, a commercially available PTFE was added dropwise and mixed in the form of a Polyflon dispersion (average particle size of 0.3 μm). PTFE was added so that a ratio of PTFE to the entire carbon black becomes 1:5. The above dispersion containing PTFE added therein was suction-filtered on the carbon paper, followed by heat sintering

through firing in a nitrogen atmosphere electric furnace at a temperature of 340°C for 20 minutes to produce a porous gas diffusion electrode 1 and a gas diffusion electrode 2.

(Preparation of Electrolytic Solution)

Sodium hydrogen carbonate $NaHCO_3$ and sodium hydroxide NaOH were dissolved in ion-exchange water, and the pH value was variously changed under the condition where $NaHCO_3$ is saturated.

(Assembling of Device)

A gas diffusion electrode 1 and a gas diffusion electrode 2 were disposed oppositely each other, and then the space therebetween was filled with an electrolytic solution 3. The electrolytic solution 3 was sealed so as not to contact with the open air through the gas diffusion electrode 1 and the gas diffusion electrode 2, and then these electrodes were connected to a DC power 4 so that the gas diffusion electrode 1 serves as a cathode and the gas diffusion electrode 2 serves as an anode. Thereby, the carbon dioxide enrichment device was obtained. In order to enable observation of the amount of carbon dioxide discharged from the gas diffusion electrode 2, a glass container with a tube (having a volume that can achieve 8 $mL/cm^2$) was attached to the gas diffusion electrode 2 side, and then sealed with an O-ring so as not to leak the discharged gas. A carbon dioxide detector (solid electrolyte sensor type, resolution of 0.01%) was attached to a pipe portion of the glass container so as not to leak the discharged gas. Room temperature and the temperature of the system were adjusted to 25°C.

The gas diffusion electrode 1 was connected to an anode of a DC power 4 and the gas diffusion electrode 2 was connected to a cathode, and the space between both electrodes was filled with the electrolytic solution 3 having a pH of 9.0 adjusted with NaOH, and then DC voltage of 1.2 V was applied between both electrodes. Discharge of carbon dioxide from the gas diffusion electrode 2 was confirmed by application of a voltage. The amount of carbon dioxide emitted from the gas diffusion electrode 2 was confirmed by measuring the concentration of carbon dioxide in the glass container attached to the gas diffusion electrode 2 using a carbon dioxide detector. The results are illustrated in Fig. 2. The emission amount was calculated by the following [Equation 2].

[Equation 2]

(Amount of emissions per unit area) = (Concentration of carbon dioxide in glass container) × (Volume of glass container)/(Area of gas diffusion electrode 2 surrounded by glass container)

Fig. 2 revealed that the amount of carbon dioxide emissions increases in proportion to the elapsed time since the application of a voltage. As is apparent therefrom, use of the carbon dioxide enrichment device enables carbon dioxide enrichment in a stable manner.

[Example 2]

In the same manner as in Example 1, the pH of the electrolytic solution 3 was variously changed by the addition of NaOH and DC voltage of 1.2 V was applied between the gas diffusion electrode 1 and gas diffusion electrode 2. The amount of carbon dioxide emissions was confirmed by measuring the concentration of carbon dioxide in the glass container attached to the gas diffusion electrode 2 using a carbon dioxide detector. The results are illustrated in Fig. 3. Fig. 3 revealed that the discharge rate of carbon dioxide significantly depends on the pH of the electrolytic solution pH, and that the amount of $CO_2$ emissions per unit area becomes the maximum when the pH of the electrolytic solution is 9.0. As is apparent therefrom, the pH of the electrolytic solution 3 is preferably from 8.5 to 9.5.

[Comparative Example]

Table 1 shows the results obtained by comparing performance of the carbon dioxide enrichment device illustrated in Fig. 2 mentioned in Example 1 with carbon dioxide enrichment performance of the carbon dioxide facilitated transport membrane utilizing a difference in a permeation rate of a porous polymer membrane mentioned in Non-Patent

Document 1, and carbon dioxide enrichment performance of a device using a solid molten salt mentioned in Patent Document 1. As is apparent from Table 1, the carbon dioxide enrichment device according to the present invention has higher carbon dioxide enrichment performance than that of the carbon dioxide facilitated transport membrane of Comparative Example 1 under the condition of 1 atom, and also can exhibit high carbon dioxide enrichment performance without heating to high temperature, like the solid molten salt electrochemical device of Comparative Example 2.

[Example 3]

(Preparation of Electrode Catalyst (Co-2,6-diaminopyridine Polymer (CoDAP) Catalyst) made of Metal Complex)

A 2,6-diaminopyridine monomer (Aldrich Corporation) was mixed with an oxidizing agent ammonium peroxydisulfate (APS) (Wako Corporation) in a molar ratio of 1:1.5, followed by mixing. Specifically, 5.45 g of 2,6-diaminopyridine and 1 g of sodium hydroxide were dissolved in 400 mL of distilled water, and then 27.6 g of APS and 100 mL of water were added. The obtained mixture was stirred for 5 minutes and 2,6-diaminopyridine was polymerized at room temperature for 12 hours. After polymerization reaction, the obtained black precipitate was recovered by centrifugation at 3,000 rpm, and then washed three times with distilled water. The precipitate was dried under vacuum at 60°C for several hours to obtain a 2,6-diaminopyridine polymer.

Subsequently, 5.45 g of a 2,6-diaminopyridine polymer and 3.62 g of cobalt nitrate (Wako Pure Chemical Industries, Ltd.) were suspended in a solution of 150 mL of water and ethanol (in a mixing ratio of 1:1) so that a molar ratio of 2,6-diaminopyridine (raw monomer) to cobalt (catalytic metal atom) becomes 4:1. In the same manner, each amount of the 2,6-diaminopyridine polymer and cobalt nitrate was calculated from the molar ratio so that each molar ratio of 2,6-diaminopyridine to cobalt becomes 6:1, 8:1, and 10:1, followed by mixing. The suspension was subjected to ultrasonic mixing for 1 hour using sonicator ultrasonic probe systems (AS ONE Corporation) and stirred at 60°C for 2 hours, and then the solution was vaporized. The remaining powder of a polymer metal complex composed of 2,6-diaminopyridine polymer and cobalt was ground in a quartz mortar.

The polymer metal complex was fired under an ammonia gas atmosphere at 700°C for 1.5 hours. The obtained fired metal complex was subjected to an ultrasonic pickling treatment (pre-leaching) using a 12N hydrochloric acid solution for 8 hours, followed by removal of an insoluble substance and an inert substance and further well washing with deionized water. Finally, the fired metal complex as an electrode catalyst was recovered by filtration and dried at 60°C.

(Production of Gas Diffusion Electrode)

In the same manner as in Example 1, except that a Co-2,6-diaminopyridine polymer (CoDAPP) catalyst was used in place of the platinum-supported carbon black used in Example 1, a gas diffusion electrode 1 and a gas diffusion electrode 2 were produced.

Using the electrolytic solution 3 having a pH of 9.0, carbon dioxide enrichment performance was evaluated by the same device constitution and evaluation procedure as in Example 1.

Fig. 4 revealed that it is also possible to enrich carbon dioxide in a stable manner even when using an electrode catalyst composed of a metal complex, and that the carbon dioxide enrichment device of the present invention has carbon dioxide enrichment performance which is equal to or higher than that of a platinum-supported carbon black.

Table 1

| | Carbon dioxide enrichment device | Enrichment performance [25 ° C, 1 atom] ($\mu$L/minute·cm$^2$) |
|---|---|---|
| Example 1 | Carbon dioxide enrichment device according to present invention | 50 |
| Comparative Example 1 | Carbon dioxide facilitated transport membrane | 6 (Pressure reduction on permeation side) |
| Comparative Example 2 | Solid molten salt electrochemical device | - |

[Description of reference numerals]

1 First gas diffusion electrode (cathode)
2 Second gas diffusion electrode (anode)
3 Electrolytic solution
4 DC power

## Claims

1. A carbon dioxide enrichment device, comprising:

a first gas diffusion electrode;
a second gas diffusion electrode separated from the first gas diffusion electrode; and
an electrolytic solution existing between the first gas diffusion electrode and the second gas diffusion electrode to be in contact with the first gas diffusion electrode and the second gas diffusion electrode,
wherein the electrolytic solution contains a solvent and a solute dissolved in the solvent, and the solute is dissolved in the solvent to form a dissolved inorganic carbon containing at least one of carbonic acid, hydrogen carbonate ions, and carbonic acid ions; oxygen is consumed by an oxygen reduction reaction on the first gas diffusion electrode, whereby a dissolved inorganic carbon is formed by a dissolution and ionization reaction of carbon dioxide in the solvent; the dissolved inorganic carbon derived from the solute or the dissolved inorganic carbon formed on the first gas diffusion electrode is transported to the second gas diffusion electrode; and oxygen is formed from the solvent in the vicinity of the second gas diffusion electrode by an oxidation reaction of the solvent on the second gas diffusion electrode, and carbon dioxide is formed from the dissolved inorganic carbon.

2. The carbon dioxide enrichment device according to Claim 1, wherein a total inorganic carbon concentration in the electrolytic solution, calculated by the following [Equation 1], is 100 μmol/L or more:

[Equation 1]

$$(\text{Total inorganic carbon concentration}) = [H_2CO_3] + [HCO_3^-] + [CO_3^{2-}].$$

3. The carbon dioxide enrichment device according to Claim 1 or 2, wherein pH of the electrolytic solution is in the range of from 5 to 14.

4. The carbon dioxide enrichment device according to any one of Claims 1 to 3, wherein a molar ratio of carbon dioxide and oxygen to be emitted from the second gas diffusion electrode is in the range of from 1:0.1 to 1:10.

5. The carbon dioxide enrichment device according to any one of Claims 1 to 4, wherein the first gas diffusion electrode and the second gas diffusion electrode comprise a porous conductor and an electrode catalyst.

6. The carbon dioxide enrichment device according to Claim 5, wherein the electrode catalyst contains a metal complex or a catalytic component of the metal complex, the metal complex containing any one of a polymer of one or more monomers selected from the group consisting of diaminopyridine, triaminopyridine, tetraaminopyridine, a diaminopyridine derivative, a triaminopyridine derivative, and a tetraaminopyridine derivative; or a modified product of the polymer; or a catalytic metal; and the electrode catalyst satisfying at least one of the following (i) and (ii):

(i) the content of metal coordinated to a nitrogen atom, analyzed by X-ray photoelectron spectroscopy, is 0.4 mol% or more, and
(ii) the existence of metal coordinated to a nitrogen atom is recognized by X-ray photoelectron spectroscopy, and the content of the nitrogen atom is 6.0 mol% or more.

7. The carbon dioxide enrichment device according to Claim 6, wherein the electrode catalyst contains a polymer of one or more monomers selected from the group consisting of diaminopyridine, triaminopyridine, and tetraaminopyridine; or a fired metal complex obtained by firing a polymer metal complex composed of a catalytic metal; or a catalyst component of the fired metal complex.

**8.** The carbon dioxide enrichment device according to any one of Claims 4 to 7, wherein a specific surface area of the porous conductor is 1 $m^2/g$ or more, in the BET adsorption measurement.

**9.** The carbon dioxide enrichment device according to any one of Claims 1 to 8, wherein the electrolytic solution is a polymer gel electrolyte.

**10.** The carbon dioxide enrichment device according to any one of Claims 1 to 9, wherein the electrolytic solution contains a carbonic anhydrase catalyst facilitating a reaction of the following [Chemical Formula 1]:

[Chemical Formula 1] $CO_2 + H_2O \rightarrow HCO_3^- + H^+$.

Fig. 1

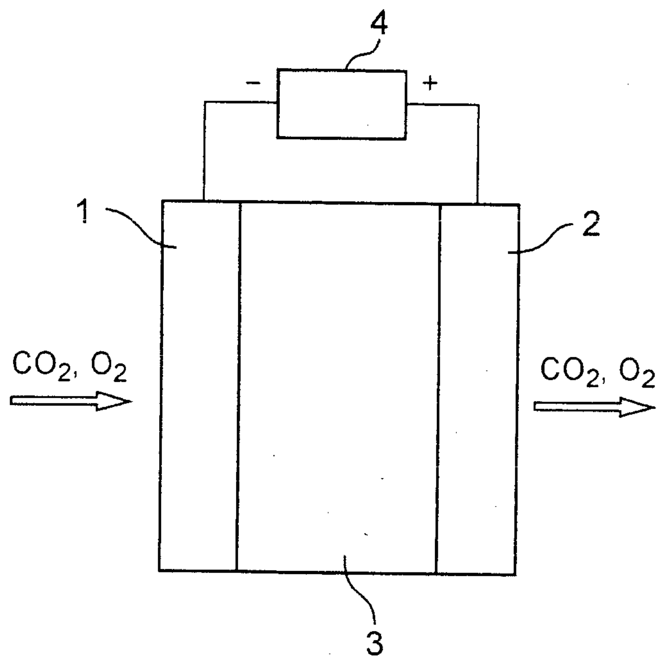
4
-
+
1
2
$CO_2$, $O_2$
$CO_2$, $O_2$
3

Fig. 2

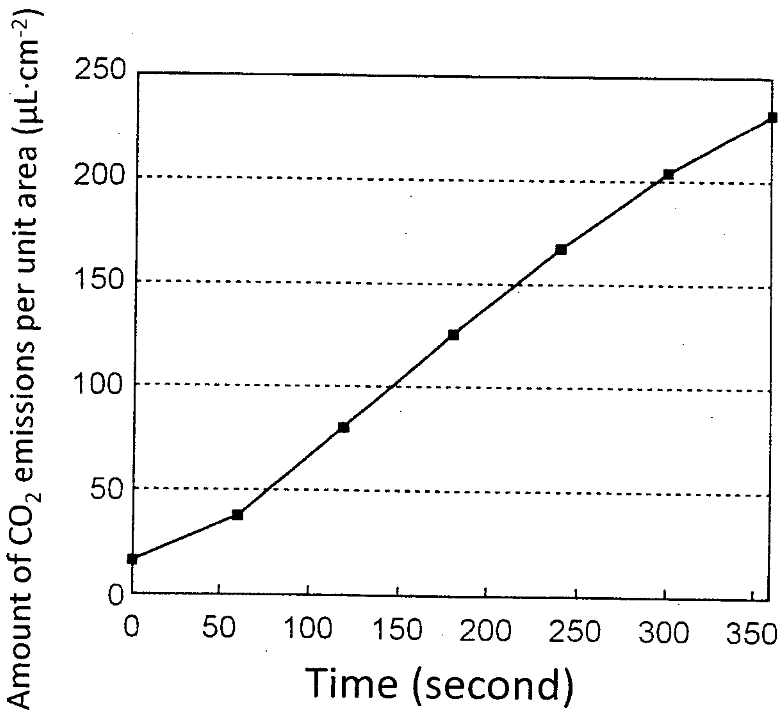
Amount of $CO_2$ emissions per unit area (μL·cm$^{-2}$)
250
200
150
100
50
0
0
50
100
150
200
250
300
350
Time (second)

Fig. 3

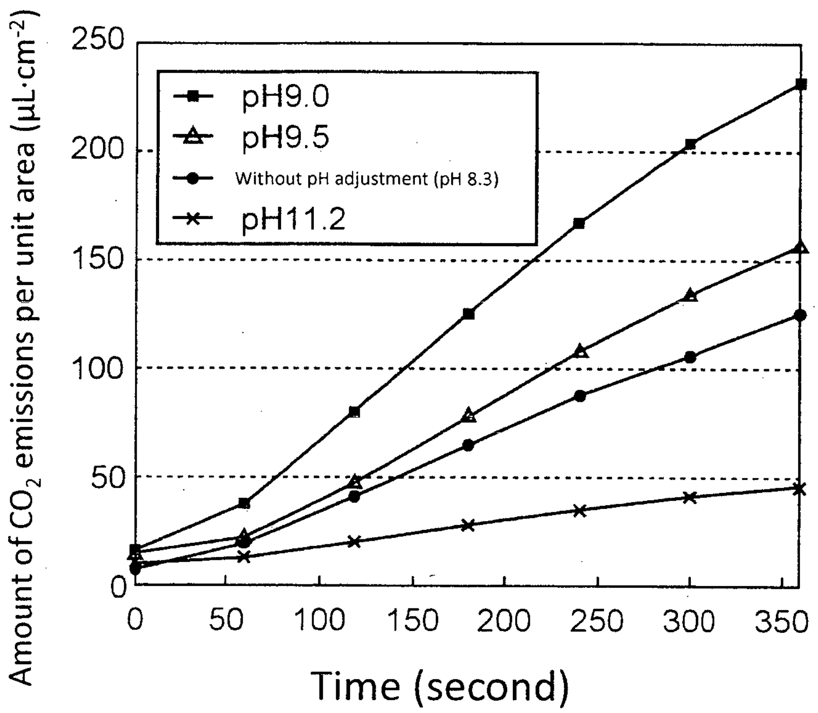
Amount of $CO_2$ emissions per unit area (μL·cm$^{-2}$)
250
200
150
100
50
0
0
50
100
150
200
250
300
350
Time (second)
pH9.0
pH9.5
Without pH adjustment (pH 8.3)
pH11.2

Fig. 4

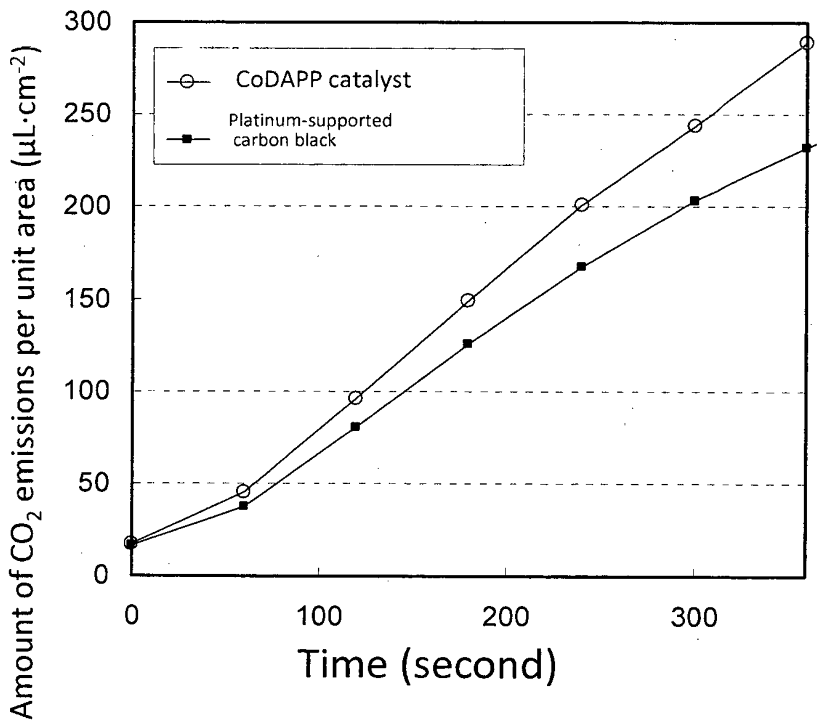
Amount of $CO_2$ emissions per unit area (μL·cm$^{-2}$)
300
250
200
150
100
50
0
0
100
200
300
Time (second)
CoDAPP catalyst
Platinum-supported carbon black

## INTERNATIONAL SEARCH REPORT

International application No.
PCT/JP2012/003505

A. CLASSIFICATION OF SUBJECT MATTER
*C01B31/20*(2006.01)i, *B01J23/42*(2006.01)i, *B01J37/34*(2006.01)i, *C25B1/00*(2006.01)i, *C25B11/03*(2006.01)i

According to International Patent Classification (IPC) or to both national classification and IPC

B. FIELDS SEARCHED

Minimum documentation searched (classification system followed by classification symbols)
C01B31/20, B01J23/42, B01J37/34, C25B1/00, C25B11/03

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2010-021141 A (Palo Alto Research Center Inc.), 28 January 2010 (28.01.2010), claims 1, 2; paragraphs [0011], [0018], [0024], [0026], [0033], [0040]; fig. 1 & US 2010/0005959 A1 & EP 2145668 A1 | 1-10 |
| A | JP 11-312527 A (Nippon Steel Corp.), 09 November 1999 (09.11.1999), claims; paragraph [0018]; fig. 1 (Family: none) | 1-10 |
| A | JP 2000-234190 A (Ishikawajima-Harima Heavy Industries Co., Ltd.), 29 August 2000 (29.08.2000), claims; fig. 1 (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 June, 2012 (20.06.12) | Date of mailing of the international search report<br>03 July, 2012 (03.07.12) |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11028331 A

### Non-patent literature cited in the description

- **R. YEGANI.** *J. Membr. Sci.,* 2007, vol. 291, 157